(19) Europäisches Patentamt — European Patent Office — Office européen des brevets

(11) **EP 3 405 781 B1**

(12) **EUROPÄISCHE PATENTSCHRIFT**

(45) Veröffentlichungstag und Bekanntmachung des Hinweises auf die Patenterteilung:
**10.08.2022 Patentblatt 2022/32**

(51) Internationale Patentklassifikation (IPC):
**G01N 29/024** *(2006.01)*  **G01N 29/22** *(2006.01)*
**G01N 29/24** *(2006.01)*  **G01F 1/66** *(2022.01)*

(21) Anmeldenummer: **17705024.2**

(22) Anmeldetag: **24.01.2017**

(52) Gemeinsame Patentklassifikation (CPC):
**G01N 29/024; G01N 29/222; G01N 29/2462;**
G01F 1/662; G01N 2291/0423; G01N 2291/0428

(86) Internationale Anmeldenummer:
**PCT/EP2017/051429**

(87) Internationale Veröffentlichungsnummer:
**WO 2017/125612 (27.07.2017 Gazette 2017/30)**

(54) **VORRICHTUNG ZUR BESTIMMUNG VON EIGENSCHAFTEN EINES MEDIUMS MIT DÄMPFUNGSELEMENT UND/ODER OFFENEM LEITELEMENT**

DEVICE FOR DETERMINING PROPERTIES OF A MEDIUM COMPRISING A DAMPING ELEMENT AND/OR OPEN GUIDE ELEMENT

DISPOSITIF DE DÉTERMINATION DE CARACTÉRISTIQUES D'UN MILIEU, COMPRENANT UN ÉLÉMENT D'AMORTISSEMENT ET/OU UN ÉLÉMENT DE GUIDAGE OUVERT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.01.2016 DE 102016200945**

(43) Veröffentlichungstag der Anmeldung:
**28.11.2018 Patentblatt 2018/48**

(73) Patentinhaber: **Endress+Hauser Flow Deutschland AG**
**96450 Coburg (DE)**

(72) Erfinder: **RAUTENBERG, Jens**
**59590 Geseke (DE)**

(74) Vertreter: **Maikowski & Ninnemann Patentanwälte Partnerschaft mbB Postfach 15 09 20 10671 Berlin (DE)**

(56) Entgegenhaltungen:
EP-A2- 2 343 548      DE-A1-102011 119 673
DE-A1-102014 106 706  US-A- 4 735 097
US-A- 4 838 127

## Beschreibung

Die vorliegende Erfindung betrifft eine Vorrichtung zur Bestimmung von physikalischen und/oder chemischen und/oder biologischen Eigenschaften eines Mediums nach dem Oberbegriff des Anspruchs 1.

Das Medium, dessen physikalische, chemische und/oder biologische Eigenschaften durch ein gattungsgemäßes Verfahren zu bestimmen sind, ist vorzugsweise eine Flüssigkeit oder ein Gas oder ein weiches Material, insbesondere ein hochviskoses, teigartiges oder pastöses Medium. Bei den zur Bestimmung der Eigenschaften genutzten akustischen Wellen handelt es sich beispielsweise um Ultraschallwellen, die von einem entsprechenden Sender durch ein Sendesignal erzeugt werden.

Bei einem bekannten Verfahren zur Bestimmung physikalischer, chemischer und/oder biologischer Eigenschaften eines Mediums werden z.B. wenigstens zwei akustische Wellen durch ein Sendesignal erzeugt, die sich zumindest teilweise durch das Medium entlang identischer oder unterschiedlicher Ausbreitungsrichtungen ausbreiten, bevor sie jeweils an einem in der jeweiligen Ausbreitungsrichtung liegendem Empfänger empfangen werden. Beispielsweise werden akustische Wellen in einem strömenden Medium einerseits in eine erste Ausbreitungsrichtung in Strömungsrichtung des Mediums und andererseits in eine zweite Ausbreitungsrichtung entgegen der Strömungsrichtung des Mediums erzeugt.

Aus den an den jeweiligen Empfängern generierten Empfangssignalen kann dann eine Laufzeitdifferenz ermittelt und hieraus z. B. auf die (mittlere) Strömungsgeschwindigkeit des Mediums geschlossen werden. Werden alternativ oder zusätzlich noch Laufzeiten und/oder Amplituden und/oder Frequenzänderungen einer akustischen Welle von einem Sender zu einem Empfänger mit Hilfe der Empfangssignale ermittelt, können weitere Rückschlüsse über physikalische, chemische und/oder biologische Eigenschaften des Mediums gewonnen werden, wie z. B. dessen Dichte, Temperatur oder Zusammensetzung.

Aus der WO 2008/034878 A2 ist eine Vorrichtung bekannt, bei der akustische Oberflächenwellen erzeugt werden, die in einem Wellenleiter Volumenschallwellen in das jeweilige Medium einkoppeln. Durch wiederholte Auskopplung von Oberflächenwellen an denjenigen Stellen, an denen die Volumenschallwelle auf eine das Medium berandende Wandung trifft, werden an einem Empfänger wiederum akustische Oberflächenwellen empfangen, deren Laufzeiten und Laufzeitendifferenzen charakteristisch für das Medium sowie dessen physikalische, chemische und/oder biologische Eigenschaften sind. Vergleichbare Vorrichtungen gehen aus der DE 10 2014 106 706 A1, der DE 10 2011 119 673 A1, der EP 2 343 548 A2 und der US 4,735,097 A hervor.

Bei einem aus der WO 2008/034878 A2 beschriebenen Vorrichtung sowie dem damit umgesetzten Verfahren bekommt somit der Verarbeitung der an den jeweiligen Empfängern erzeugten Empfangssignale für eine empfangene akustische Welle - hier eine akustische Oberflächenwelle - eine entscheidende Bedeutung zu. So ist die Ermittlung einer Laufzeitdifferenz oder einer absoluten Laufzeit aus an den Empfängern erzeugten Empfangssignalen keineswegs trivial und unter Umständen mit erheblichem rechnerischem Aufwand verbunden. Je nach aus den Empfangssignalen zu extrahierender Information werden unterschiedlichste Verfahren zur Signalverarbeitung eingesetzt. Beispielsweise ist es bekannt, modulierte Sendesignale zu nutzen, um anhand der gewonnenen Empfangssignale verlässlicher auf die Eigenschaften des Mediums schließen zu können.

Im Übrigen gibt es viele Ultraschallverfahren zur Messung der Schallgeschwindigkeit in Fluiden, sei es im Direktstrahlverfahren oder mittels Leaky Lamb-Wellen. Der Vorteil von System auf Basis von Leaky Lamb-Wellen ist ihre große Robustheit gegenüber dispergierten Partikeln oder Blasen, da im Vergleich zum Direktstrahlverfahren eine deutlich größere Chance besteht, dass Anteile des ausgesandten Schallpakets auch den Empfänger erreichen. Neben der Schallgeschwindigkeit sind die Temperatur, vor allem aber auch die Stoffdichte wichtige Messgrößen, wenn eine stoffliche Zusammensetzung untersucht werden soll. Zur Messung der Stoffdichte gibt es ebenfalls eine Reihe verschiedener Messgeräte. Die Stoffdichte kann in gewissen Grenzen ebenfalls durch Systeme auf Basis von Lamb-Wellen bestimmt werden. Nachteilig bei den verfügbaren Systems ist jedoch häufig ihre vergleichbar große Bauform, womit der Zugang zu vielen Anwendungsfeldern schwierig ist. Beispielsweise sind in Rohren großer Nennweite aufgrund der Strahlengänge lange Sensorausführungen erforderlich, die einen Einbau im Prozess erschweren können. Darüber hinaus kann eine Anordnung mit gegenüberliegenden Platten eine Reinigung erschweren.

Es ist daher Aufgabe der Erfindung eine in dieser Hinsicht verbesserte Vorrichtung zur Bestimmung von physikalischen, chemischen und/oder biologische Eigenschaften eines Mediums bereitzustellen.

Diese Aufgabe wird einer Vorrichtung des Anspruchs 1 gelöst.

Mögliche vorteilhafte Ausführungsvarianten sind insbesondere durch die Unteransprüche gegeben.

Erfindungsgemäß ist eine Vorrichtung zur Bestimmung von physikalischen, chemischen und/oder biologischen Eigenschaften eines Mediums vorgeschlagen, mit

- einem akustischen Wellenleiter, der ein Leitelement mit einer dem Medium zugewandten Innenseite und einer dieser Innenseite gegenüberliegende Außenseite aufweist,
- mindestens einem Sender, mittels dem wenigstens eine erste Oberflächenwelle an dem Leitelement anregbar ist, die sich an dem Leitelement entlang ausbreitet und zudem zumindest teilweise als akustische Welle in das Medium einkoppelt, wobei der Wellenleiter ausgebildet und konfiguriert ist, dass die akustische Welle zumindest anteilig an dem Leitelement wieder als zweite Oberflächenwelle einkoppelt,

- mindestens einem Empfänger, mittels dem sowohl erste als auch zweite Oberflächenwellen empfangbar sind, und

- einer wenigstens mit dem Empfänger gekoppelten elektronischen Auswerteeinrichtung, mittels der auf Basis empfangener erster und zweiter Oberflächenwellen physikalische, chemische und/oder biologische Eigenschaften des Mediums bestimmbar sind. Hierbei ist ferner vorgesehen, dass

- die dem Medium zugewandte Innenseite konkav gewölbt ist und die Außenseite konvex gewölbt ist und der Wellenleiter mit dem derart gewölbten Leitelement eingerichtet ist, dass sich eine an der konkaven Innenseite einkoppelnde zweite Oberflächenwelle entlang einer Ausbreitungsrichtung zu dem Empfänger ausbreitet, und

- mindestens ein in der Ausbreitungsrichtung der zweiten Oberflächenwelle hinter dem Empfänger liegendes Dämpfungselement vorgesehen ist, das angeordnet und eingerichtet ist, zu vermeiden, dass Oberflächenwellen den Empfänger erreichen, die sich entgegengesetzt zur Ausbreitungsrichtung der wenigstens einen zweiten Oberflächenwelle ausbreiten.

Erfindungsgemäß schließt sich an das Leitelement ein Abschnitt des Wellenleiters als Dämpfungselement an, der entgegengesetzt zu dem Leitelement gewölbt und/oder umgebogen ist. Dies schließt insbesondere eine Ausgestaltung ein, bei der ein Übergang zwischen dem Leitelement und dem als Dämpfungselement dienenden Abschnitt nicht einem stetigen Verlauf, insbesondere einer Kreisbahnabschnitt folgt und z.B. einen Knick aufweist. Unter einem Dämpfungselement wird ferner auch ein Abschnitt des Wellenleiters verstanden, der in Ausbreitungsrichtung der zweiten (und ersten) Oberflächenwellen hinter dem Empfänger derart dimensioniert ist, dass an einem Ende dieses Abschnitts reflektierte Oberflächenwellen den Empfänger nicht wieder erreichen oder bereits die sich in Ausbreitungsrichtung ausbreitenden Oberflächenwellen das Ende nicht erreichen. Es wird somit gezielt eine Art Auslaufstrecke mit definierter Dämpfungslänge hinter dem Empfänger vorgesehen.

Folgt der Verlauf zumindest teilweise einem Kreisbahnabschnitt ist nach einer Weiterbildung vorgesehen, dass ein Biegeradius r des als Dämpfungselement dienenden Abschnitts kleiner ist als ein Wölbungsradius R des Leitelements. Beispielsweise gilt R/r ≥ 1,5 oder R/r ≥ 3,5.

In einer Variante kann ein entgegengesetzt gewölbter oder entgegengesetzt umgebogener Abschnitt auch relativ zu der Außenseite des Leitelements verstellbar sein. Beispielsweise kann der Abschnitt flexibel ausgeführt sein, um seine räumliche Lage bezüglich der Außenseite des Leitelements einstellen zu können.

In einer Ausführungsvariante ist ein weiteres Dämpfungselement durch ein separates Element gebildet, das lediglich an einen Abschnitt des Leitelements oder einen sich hieran in der Ausbreitungsrichtung der zweiten Oberflächenwelle anschließenden Abschnitt des Wellenleiters angeformt oder befestigt ist. Beispielsweise kann das separate Element eine Vergussmasse umfassen, insbesondere eine Vergussmasse, in der zumindest teilweise der Empfänger aufgenommen ist.

In einer Ausführungsvariante kann vorgesehen sein, dass sich eine Vergussmasse zwischen zwei sich gegenüberliegenden Bereichen eines gewölbten oder umgebogenen Abschnitts befindet, der als Dämpfungselement dient. Durch die Vergussmasse kann dabei die Dämpfung zusätzlich erhöht werden, insbesondere wenn die Vergussmasse die zwei sich gegenüberliegenden Bereiche miteinander verbindet. Die Vergussmasse füllt hier somit einen zwischen den sich gegenüberliegenden Bereichen ausgebildeten Kanal oder Zwischenraum zumindest so weit aus, dass dieser Kanal oder Zwischenraum wenigstens teilweise mit Vergussmasse gefüllt und zumindest teilweise geschlossen ist. Die Vergussmasse stabilisiert, d.h., versteift hierüber dann auch einen umgebogenen Abschnitt und kann diesen relativ zu der Außenseite des Leitelements fixieren.

Grundsätzlich kann der Wellenleiter Teil eines Rohres oder offenen Gerinnes sein, in dessen Innenraum sich das Medium befindet. Alternativ ist der Wellenleiter Teil eines Sensorelements, das zur Bestimmung der physikalischen, chemischen und/oder biologischen Eigenschaften eines Mediums in einen mit dem Medium gefüllten Innenraum ein zu tauchen ist. Während damit im vorstehend zuerst genannten Fall der Wellenleiter als Teil eines das Medium führenden Rohres, beispielsweise in Form eines Rohrstückes, ausgebildet ist und von dem Medium durchströmt sein kann, ist im zuletzt genannten Fall der Wellenleiter Teil eines einzutauchenden Sensorelements, zum Beispiel einer Tauchsonde, das in das Medium eingetaucht wird, sodass die konkave Innenseite des Leitelements mit dem Medium in Kontakt steht.

Ein Wölbungsradius R der Innenseite des Leitelements ist in einer Ausführungsvariante in Abhängigkeit von einer Frequenz f in MHz der wenigstens einen anzuregenden ersten Oberflächenwelle eingestellt, und zwar gemäß der Formel

$$R \geq \frac{30mm * MHz}{f}$$

Es hat sich gezeigt, dass sich bei einer Vorgabe des Wölbungsradius der Innenseite gemäß der vorstehenden Formel mittels des Wellenleiters besonders gute Messergebnisse erzielen lassen und insbesondere die Auswertung von Laufzeiten und Laufzeitdifferenzen der empfangenen Signalpakete, auf Basis derer die physikalischen, chemischen und/oder biologischen Eigenschaften des Mediums bestimmt werden, erleichtert ist.

In einer Ausführungsvariante weist der Wellenleiter einen Halteabschnitt auf,

- der als Handhabe für einen Nutzer dient und/oder
- der als Befestigungselement für eine Sensor Integration dient und/oder
- an dem ein Dämpfungselement und/oder ein Sender und/oder Empfänger angeordnet ist.

Die Handhabe des Wellenleiters, die gegebenenfalls auch zumindest teilweise durch das Leitelement ausgebildet sein kann, stellt beispielsweise eine definierte Grifffläche für die Hand eines Nutzers bereit, um den Wellenleiter in einem mit dem Medium gefüllten Innenraum zu halten. Dient der Halteabschnitt alternativ oder ergänzend als Befestigungselement für eine Sensorintegration, ist hierüber eine Schnittstelle bereitgestellt, um den Wellenleiter an einem Sensorelement festzulegen und beispielsweise mit einer übergeordneten Sensorelektronik und/oder der elektronischen Auswerteeinrichtung zu verbinden. Alternativ oder ergänzend kann der Halteabschnitt eine Anbringungsfläche für ein (zusätzliches) Dämpfungselement und/oder einen (zusätzlichen) Sender und/oder einen (zusätzlichen) Empfänger bereitstellen.

Der Halteabschnitt an dem Wellenleiter kann beispielsweise geradlinig verlaufend ausgebildet sein und sich an das gewölbte Leitelement anschließen. In einer Ausführungsvariante ist in einer Querschnittsansicht das Leitelement an einem Ende mit einem gewölbten und/oder umgebogenen Abschnitt versehen, der als Dämpfungselement dient, während sich an das andere Ende des Leitelements der geradlinig verlaufende Halteabschnitt anschließt.

In einem Ausführungsbeispiel ist das Leitelement derart gewölbt und sind der Sender und der Empfänger derart zueinander ausgerichtet, dass eine Ausbreitungsrichtung der akustischen Welle in dem Medium unter einem Winkel ≥30° zu einer Mittelachse verläuft, um die sich die konkav gewölbte Innenseite des Leitelements erstreckt. Die Wölbung des Leitelements und die Positionierung der Sender und der Empfänger relativ zueinander an dem Leitelement werden hier folglich - zum Beispiel anhand von Versuchsaufbauten - aufeinander abgestimmt und derart gewählt, dass stets der gewünschte Winkelbereich für die Ausbreitungsrichtung der akustischen Welle relativ zu der Mittelachse gegeben ist, wenn die ersten Oberflächenwellen angeregt werden. Es hat sich gezeigt, dass unter dieser Maßgabe in bestimmten Ausführungsvarianten Vorteile bei der Messung und Auswertung erzielbar sein können.

Grundsätzlich kann der Wellenleiter mindestens zwei Sender-Empfänger-Paare aufweisen, um in unterschiedliche Ausbreitungsrichtungen Oberflächenwellen anzuregen und damit gegebenenfalls die Messgenauigkeit zu erhöhen.

Alternativ oder ergänzend können ein Sender und ein Empfänger durch eine Sender-Empfänger-Einheit bereitgestellt sein, die wahlweise als Sender oder als Empfänger betreibbar ist. Der Sender und/oder der Empfänger können insbesondere auch durch einen Transducer gebildet sein, insbesondere einen Interdigitaltransducer oder einen Wedge-Transducer.

Grundsätzlich kann der Sender eingerichtet und vorgesehen sein, Lamb-Wellen oder Wellen im Übergangsbereich von Lamb- und Rayleigh-Wellen anzuregen.

In einer Ausführungsvariante kann bei der vorgeschlagenen Vorrichtung zur Bestimmung von physikalischen, chemischen und/oder biologischen Eigenschaften eines Mediums vorgesehen sein, dass

- das Leitelement einseitig offen ist und die dem Medium zugewandte Innenseite konkav gewölbt ist und die Außenseite konvex gewölbt ist und der Wellenleiter mit einem derart einseitig gewölbten Leitelement eingerichtet ist, dass sich eine an der konkaven Innenseite einkoppelnde zweite Oberflächenwelle entlang einer Ausbreitungsrichtung zu dem Empfänger ausbreitet, und
- der Wellenleiter Teil eines Sensorelements ist, das zur Bestimmung der physikalischen, chemischen und/oder biologischen Eigenschaften eines Mediums in einen mit dem Medium gefüllten Innenraum einzutauchen ist.

Bei einer (Mess-) Vorrichtung gemäß dieser Ausführungsvariante ist folglich kein das Medium umfangsseitig vollständig umschließendes Leitelement noch ein gegenüberliegendes, weiteres Leitelement vorgesehen. Es fehlt somit insbesondere an einer gegenüberliegenden Platte als weiterem Leitelement, wie sie bei bisher üblichen Messvorrichtungen, die auf Basis von Oberflächenwellen arbeiten, vorgesehen ist. Demgegenüber ist eine offene Bauform des Wellenleiters vorgesehen, so dass der Wellenleiter mit dem Leitelement im Querschnitt z.B. C-förmig oder U-förmig ausgebildet ist.

Die beigefügten Figuren veranschaulichen exemplarisch mögliche Ausführungsbeispiele der vorgeschlagenen Lösung.

Hierbei zeigen:

Figur 1          schematisch und in Querschnittsansicht eine erfindungsgemäße (Mess-) Vorrichtung;

Figuren 2A-2D    jeweils in Querschnittsansicht Varianten einer erfindungsgemäßen (Mess-) Vorrichtung.

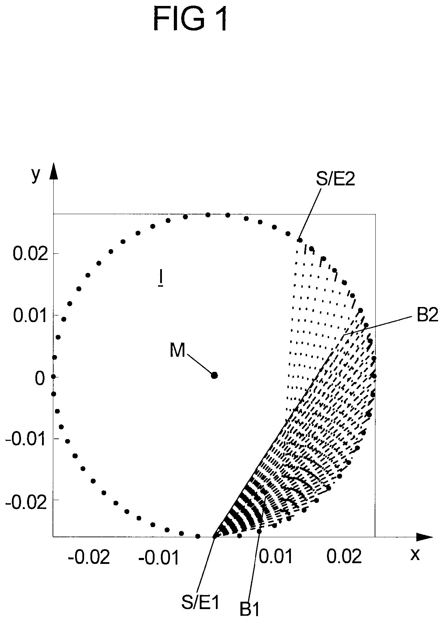

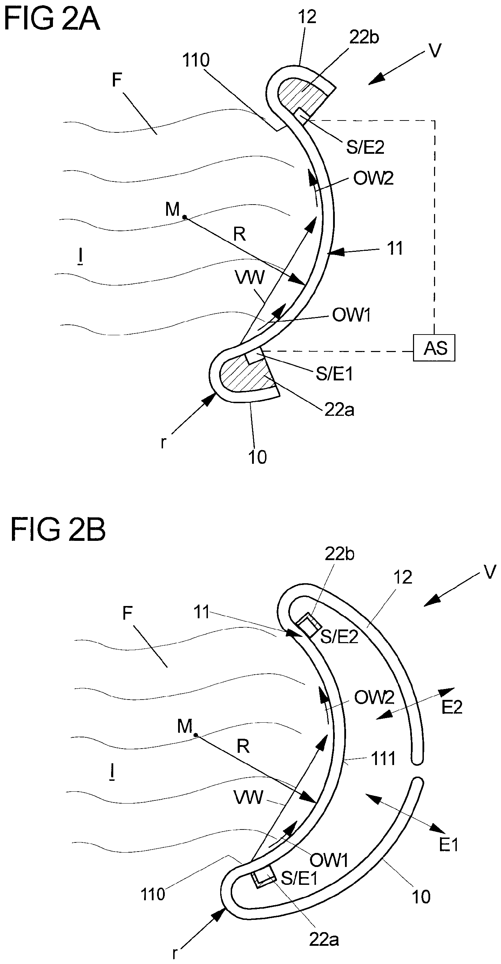

Hierbei zeigt die Figur 1 in einer Querschnittsansicht schematisch eine Ausführungsvariante einer erfindungsgemäßen (Mess-) Vorrichtung. Die Figuren 2A bis 2D zeigen ferner unterschiedliche Varianten einer erfindungsgemäßen (Mess- ) Vorrichtung V. Die Messvorrichtungen V der Figuren 1 und 2A-2D weisen jeweils ein Leitelement 11 auf, das hier als gebogene Platte, einzelnes Rohrsegment oder offenes Gerinne ausgeführt ist und an dem mittels als Sender betriebenen Sender-Empfänger-Einheiten S/E1, S/E2 erste Oberflächenwellen OW1 anregbar sind. Der Wellenleiter der dargestellten Messvorrichtungen V ist jeweils Teil eines Sensorelements, das zur Bestimmung der physikalischen, chemischen und/oder biologischen Eigenschaften eines Mediums F in einen mit dem Medium F gefüllten Innenraum I eingetaucht wird.

Das Leitelement 11 weist eine Innenseite 110 auf, die bei bestimmungsgemäßer Benutzung der Messvorrichtung V dem Medium F zugewandt ist, dessen physikalische, chemische und/oder biologische Eigenschaften zu bestimmen sind. Eine der Innenseite 110 gegenüberliegende Außenseite 111 des Leitelements 11 ist konvex gewölbt. Ein mit dem Leitelement 11 definierter Wellenleiter der Messvorrichtung V ist mit dem derart gewölbten Leitelement 11 eingerichtet, dass sich eine mittels einem Sender S/E1, S/E2 erzeugte und an der konkaven Innenseite 110 einkoppelnde zweite Oberflächenwelle OW2 entlang einer Ausbreitungsrichtung zu einem an dem Leitelement 11 angeordneten Empfänger S/E2, S/E1 ausbreitet. In der Ausbreitungsrichtung der zweiten Oberflächenwelle OW2 hinter dem Empfänger S/E1, S/E2 liegt ein Dämpfungselement 10, 12, 22a oder 22b. Das jeweilige Dämpfungselement 10, 12, 22a, 22b ist angeordnet und eingerichtet, zu vermeiden, dass Oberflächenwellen den Empfänger S/E1, S/E2 erreichen, die sich entgegengesetzt zur Ausbreitungsrichtung der wenigstens einen zweiten Oberflächenwelle OW2 ausbreiten.

Als Dämpfungselemente fungieren hierbei z.B. entgegensetzt zur Wölbung des Leitelements 11 umgebogene Abschnitte 10 und 12 und Vergussmassen 22a, 22b. Über die Dämpfungselemente ist hierbei jeweils erreicht, dass eine als Empfänger betriebene Sender-Empfänger-Einheit S/E2, S/E1 nur erste und zweite Oberflächenwelle OW1 und OW2 erreichen, die sich entlang einer (Haupt-) Ausbreitungsrichtung an dem Leitelement 11 zu dem Empfänger bzw. dieser Sender-Empfänger-Einheit S/E2, S/E1 ausgebreitet haben. Sich entgegengesetzt hierzu ausbreitende Oberflächenwellen, die z.B. durch Reflexion an einem offenen Ende des Wellenleiters entstehen, werden hierdurch nicht empfangen.

Bei den vorgeschlagenen Varianten der Figuren 1 und 2A-2D ist z.B. eine gebogene Platte (Kreissegment oder fluidführendes Rohr) als Leitelement 11 vorgeschlagen, die das zu charakterisierende Medium, hier ein Fluid einseitig berührt. Die Lamb-Welle wird durch eine Sender-Empfänger-Einheit S/E1, S/E2 in Form einer Piezokeramik (Interdigitaltransducer oder Wedge-Transducer) auf der Platte angeregt. Sie gelangt auf der wellenführenden gebogenen Platte zu einer zweiten Piezokeramik, welche als Empfänger S/E2, S/E1 fungiert. Zusätzlich gelangt ein Teil der Welle als Leakywelle durch das angrenzende Fluidvolumen zeitversetzt auf dieselbe Platte, wo sie erneut einkoppelt (aufgrund der Reziprozität bei gleichbleibendem Biegeradius) und in Richtung Empfänger S/E2, S/E1 läuft. In Folge dessen lassen sich am Empfänger S/E2, S/E1 zwei Signalpakete detektieren, wovon Laufzeit und Laufzeitdifferenz hauptsächlich zur Schallgeschwindigkeitsbestimmung, das Amplitudenverhältnis zur Berechnung der Stoffdichte und die Laufzeit des ersten Wellenpakets zur Temperaturmessung genutzt werden. Zu diese Zweck ist eine elektronische Auswerteeinrichtung AS vorgesehen, die mit den Sender-Empfänger-Einheiten S/E2 und S/E1 gekoppelt ist (lediglich in Figur 2A dargestellt). Mittels dieser elektronischen Auswerteeinrichtung AS sind - in im Grundsatz bekannter Weise (vgl. z.B. WO 2008/034878 A2) - auf Basis empfangener erster und zweiter Oberflächenwellen OW1 OW2 physikalische, chemische und/oder biologische Eigenschaften des Mediums F bestimmbar.

Hierdurch sind somit insbesondere zwei Ausführungsformen denkbar:

1. Sender und Empfänger sind mit der Hauptausbreitungsrichtung des Schalls quer oder unter einem Wnkel>0° zur Achse eines Rohrs oder Rohrsegments angeordnet. Die Wellen laufen hauptsächlich in Umfangsrichtung, Anteile in Richtung der Rohrachse sind erlaubt. Auf diese Weise lassen sich kompaktere Inline-Varianten realisieren.

2. Sender und Empfänger sind in einem offenen Rohrsegment eingebaut. Auf diese Weise lassen sich robustere und leichter zu reinigende Sensorelemente, z.B. in Form von Tauchsonden, realisieren.

Die Figur 1 zeigt exemplarisch die Strahlengänge im Fluid bei einem Winkel der Schallstrecke von 90° zur Achse des gedachten Rohres für einen typischen Messbereich der Schallgeschwindigkeit (DN50; Mittenfrequenz des Schalls ist 1,5 MHz; Bereich B1: erste relevante Schallanteile; Bereich B2: letzte relevante Schallanteile):

Der Ursprung eines sich entsprechend der Figur 1 aufweitenden Fächers im Bereich B1 kennzeichnet die Position des Senders, wohingegen der oberste Punkt im Bereich B2 die Position des Empfängers angibt. Im Falle eines als Tauchsonde ausgestalteten Vorrichtung V ist nun vorgeschlagen, dass die Schallanteile unmittelbar hinter dem Empfänger (d.h., hinter dem als Empfänger betriebenen Sender-Empfänger-Einheit S/E2) durch eine eng nach außen gebogene Platte (Radius r z.B. größer 1,5*Plattendicke d) nach hinten abgelenkt werden, damit ein zweites Signalpaket 2 ungestört den Empfänger erreichen kann. Sender und Empfänger S/E1, S/E2 können auch umgekehrt betrieben werden, dann mit beidseitig umgebogenen Plattenenden. Die Lage des Empfängers S/E2 im Sinne einer besseren Empfindlichkeit sollte an die größte zu messende Schallgeschwindigkeit angepasst sein. Hierbei gilt die folgende Regel: Je größer die zu messende Schallgeschwindigkeit ist, umso größer ist das durch die beiden beschriebenen Punkte gekennzeichnete, zu verwendende Rohrsegment (in Form des gebogenen Leitelements 11).

Die dargestellten Varianten einer erfindungsgemäßen Messvorrichtung V dienen dabei jeweils der Messung von Schallgeschwindigkeit, Dichte und Temperatur und daraus abgeleitet der stofflichen Zusammensetzung eines Fluids F (als Realisierung eines beliebigen Mediums) mittels geführter akustischer Plattenwellen, bestehend aus einem Rohrsegment mit einseitigem Fluid-Kontakt und mindestens zwei piezoelektrischen Sender-Empfänger-Einheiten S/E1, S/E2. Hierbei können einzeln oder kumulativ die nachfolgenden Merkmale verwirklicht sein:

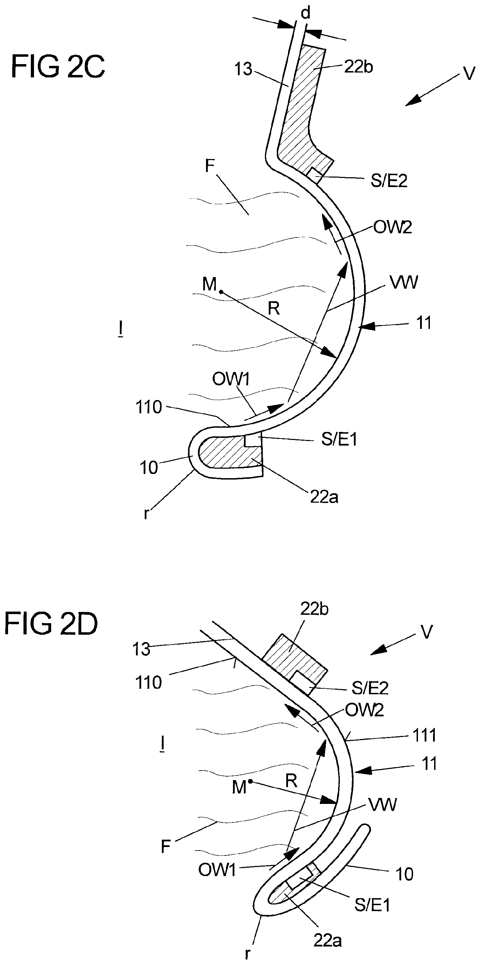

- Ein Biegeradius R der wellenführenden Platte bzw. Leitelementes 10 beträgt mindestens 30mm*MHz / Frequenz f [MHz] . Bei 1,5 MHz also entsprechend mindestens 20mm.
- Die Sende- und Empfangselemente sind zueinander über eine Trajektorie entlang des Rohrsegments so ausgerichtet, dass die Hauptausbreitungsrichtung der Schallwelle größer als 38° bis maximal senkrecht zu einer (gedachten) Rohrachse ist.
- Die piezokeramischen Sender/Empfänger (S/E1, S/E2) sind als Interdigitalwandler oder Wedge-Transducer zur Anregung von Lamb- oder Rayleigh-Wellen ausgelegt.
- Das Rohrsegment bzw. das Leitelement 11 ist Bestandteil eines in Umlaufrichtung geschlossenen Rohres.
- Die Enden des Rohrsegmentes bzw. an das Leitelement 10 anschließende Abschnitte 10 und 12 des Wellenleiters sind durch enge Biegungen (Radius r größer 1,5*Plattendicke d) nach hinten gebogen. Dabei können die Enden 10 und 12 dieser gebogenen Plattensegmente entweder jeweils mindestens die halbe Länge des Kreisbogens haben (Varianten der Figuren 2B und 2C) oder/und die Plattenenden können mit dämpfenden Vergussmassen versehen sein (Varianten der Figuren 2A bis 2D). Die genaue Endlage eines abgebogenen (Platten-) Endes 10 oder 12 ist hierbei nicht von Relevanz.

Die Figur 2A zeigt hierbei eine Ausführungsvariante mit relativen kurzen umgebogenen Leitelement-Enden 10, 12, die jeweils ein Dämpfungselement definieren, und einen Verguss 22a, 22b aufweisen. So ist in einem durch das jeweilige - bezogen auf die Innenseite 110 nach außen - umgebogene Ende des Leitelements 11 ein Kanal oder Zwischenraum ausgebildet, der teilweise oder vollständig mit einer Vergussmasse gefüllt ist. Der Kanal ist hierbei z.B. im Querschnitt U-förmig und nimmt auch das im Bereich des jeweiligen Leitelement-Endes angeordnete Sender-Empfänger-Einheit S/E1 oder S/E2 auf. Derart kann das jeweilige, an der Außenseite 111 angeordnete Sender-Empfänger-Einheit S/E1 oder S/E2 auch in der Vergussmasse des zugehörigen Dämpfungselements 22a oder 22b teilweise oder vollständig eingebettet sein.

Die Figur 2B zeigt eine Variante mit langen umgebogenen Plattenenden respektive Leitelement-Enden 10, 12, die erneut Dämpfungselemente definieren. Ein Verguss der Platte an diesen Ende ist hier optional, gleichwohl ist jede Sender-Empfänger-Einheit S/E1 und S/E2 an der Außenseite 111 teilweise in eine Vergussmasse 22a, 22b eingebettet. Die Vergussmasse 22a, 22b ist hierbei jedoch im Vergleich zur Variante der Figur 2A nur lokal aufgebracht und füllt insbesondere den jeweils durch die nach außen umgebogenen Enden 10 und 12 definierten Kanal nicht aus und verbindet daher auch nicht zwei sich gegenüberliegende Bereiche an dem gewölbten, umgebogenen Leitelement-Ende 10 oder 12.

Die vergleichsweis lang, d.h., jeweils mit einer Länge im Bereich von wenigstens 1/3 oder 1/2 des Abstands zwischen den Sender-Empfänger-Einheiten S/E1 und S/E2, ausgebildeten zur Außenseite 111 hin umgebogenen Enden stellen bereits eine ausreichende Dämpfung sicher. Ein Biegeradius r der umgebogenen Enden ist hierbei zur Förderung der Dämpfung ferner deutlich kleiner als der Wölbungsradius R der Innenseite 110.

Indem die umgebogenen aufeinander zu weisenden Enden 10 und 12, die die Dämpfungselemente definieren, vorliegend jeweils nicht mit der Vergussmasse 22a oder 22b versehen sind, wird durch diese jeweils ein Elastizitätsabschnitt E1 oder E2 bereitgestellt. An den Elastizitätsabschnitten E1 und E2 ist das jeweilige Ende 10 oder 12 flexibel, um seine räumliche Lage bezüglich der Außenseite 111 des Leitelements 11 einstellen zu können. Derart kann das jeweilige Leitelement-Ende 10 oder 12 noch relativ zu der Außenseite 111 verlagert und damit stärker aufgebogen oder stärker zu gebogen werden. Hierdurch kann der Biegeradius r verändert werden, insbesondere da ein Leitelement-Ende 10 oder 12 nicht durch Vergussmasse stabilisiert oder fixiert ist.

Die Figuren 2C und 2D zeigt jeweils eine Variante mit nur einem kurzen umgebogenen Plattenende respektive Leitelement-Ende 10 unterschiedlicher Länge (Figur 2C kurz, Figur 2D lang), kombiniert mit einem langem Plattenende respektive Leitelement-Ende. An dem zur Außenseite 111 hin umgebogenen Leitelement-Ende 10 ist erneut eine Vergussmasse 22a vorgesehen, die den gebildeten Kanal oder Zwischenraum vollständig (Figur 2C) oder teilweise (Figur 2D) füllt, das jeweilige umgebogene Leitelement 10 fixiert und in dem die als Sender betriebene Sender-Empfänger-Einheit S/E1 teilweise (Figur 2C) oder vollständig (Figur 2D) eingebettet ist

Das jeweilige in Ausbreitungsrichtung der Oberflächenwellen OW1, OW2 liegende lange Ende bildet ferner einen Halteabschnitt 13, z.B. als Teil eines Griffes oder eines Gehäuses. An dem Halteabschnitt 13 kann hierbei die Vergussmasse 22b großflächig auftragen sein (Figur 2C) und/oder erneut lediglich lokal, um eine Sender-Empfänger-Einheit S/E2 hierin anzuordnen (so dass die Sender-Empfänger-Einheit S/E2 zumindest teilweise in der Vergussmasse 22b aufgenommen ist; vgl. Figur 2D).

Die als Empfänger betriebene Sender-Empfänger-Einheit S/E2 kann entsprechend den in den Figuren 2C und 2D dargestellten Ausführungsvarianten an der konvexen Außenseite 111 angeordnet sein oder an dem ggf. geradlinig verlaufenden, längeren Plattenende, das den Halteabschnitt 13 bildet.

**Bezugszeichenliste**

| | |
|---|---|
| 1 | 1. Signalpaket |
| 10 | Leitelement-Ende / Dämpfungselement |
| 11 | Rohrsegment (gebogenes Leitelement) |
| 110 | Innenseite |
| 111 | Außenseite |
| 12 | Leitelement-Ende / Dämpfungselement |
| 13 | Halteabschnitt |
| 2 | 2. Signalpaket |
| 22a, 22b | Vergussmasse (Dämpfungselement) |
| AS | Auswerteeinrichtung |
| B1, B2 | Bereich |
| d | Wand- /Plattendicke |
| E1, E2 | Elastizitätsabschnitt |
| F | Fluid (Medium) |
| I | Innenraum |
| M | Mittelachse / Mittelpunkt |
| OW1, OW2 | Oberflächenwelle |
| R, r | Radius |
| S/E1, S/E2 | Sender-Empfänger-Einheit |
| V | (Mess-)Vorrichtung |
| VW | Volumenschallwelle |

**Patentansprüche**

1. Vorrichtung zur Bestimmung von physikalischen, chemischen und/oder biologischen Eigenschaften eines Mediums, mit

    - einem akustischen Wellenleiter, der ein Leitelement (11) mit einer dem Medium (F) zugewandten Innenseite (110) und einer dieser Innenseite (110) gegenüberliegende Außenseite (111) aufweist,
    - mindestens einem Sender (S/E1, S/E2), mittels dem wenigstens eine erste Oberflächenwellen (OW1) an dem Leitelement (11) anregbar ist, die sich an dem Leitelement (11) entlang ausbreitet und zudem zumindest teilweise als akustische Welle (VW) in das Medium (F) einkoppelt, wobei der Wellenleiter ausgebildet und konfiguriert ist, dass die akustische Welle (VW) zumindest anteilig an dem Leitelement (11) wieder als zweite Oberflächenwelle (OW2) einkoppelt,
    - mindestens einem Empfänger (S/E2, S/E1), mittels dem sowohl erste als auch zweite Oberflächenwellen (OW1, OW2) empfangbar sind, und
    - einer wenigstens mit dem Empfänger (S/E2, S/E1) gekoppelten elektronischen Auswerteeinrichtung (AS), mittels der auf Basis empfangener erster und zweiter Oberflächenwellen (OW1, OW2) physikalische, chemische und/oder biologische Eigenschaften des Mediums (F) bestimmbar sind,
    wobei
    - die dem Medium (F) zugewandte Innenseite (110) konkav gewölbt ist und die Außenseite (111) konvex gewölbt ist und der Wellenleiter mit dem derart gewölbten Leitelement (11) eingerichtet ist, dass sich eine an der konkaven Innenseite (110) einkoppelnde zweite Oberflächenwelle (OW2) entlang einer Ausbreitungsrichtung zu dem Empfänger (S/E2, S/E1) ausbreitet, und
    - mindestens ein in der Ausbreitungsrichtung der zweiten Oberflächenwelle (OW2) hinter dem Empfänger (S/E1, S/E2) liegendes Dämpfungselement (10, 12, 22a, 22b) vorgesehen ist, das vermeidet, dass Oberflächenwellen den Empfänger (S/E1, S/E2) erreichen, die sich entgegengesetzt zur Ausbreitungsrichtung der wenigstens einen zweiten Oberflächenwelle (OW2) ausbreiten

    **dadurch gekennzeichnet, dass**
    sich an das Leitelement (11) ein Abschnitt des Wellenleiters als Dämpfungselement (10, 12) anschließt, der entgegengesetzt zu dem Leitelement (11) gewölbt und/oder umgebogen ist.

2. Vorrichtung nach Anspruch 1, **dadurch gekennzeichnet, dass** ein Biegeradius r des als Dämpfungselement (10, 12) dienenden Abschnitts kleiner ist als ein Wölbungsradius R des Leitelements (11).

3. Vorrichtung nach Anspruch 2, **dadurch gekennzeichnet, dass** $R/r \geq 1{,}5$, insbesondere $R/r \geq 3{,}5$ für das Verhältnis zwischen Wölbungsradius R und Biegeradius r gilt.

4. Vorrichtung nach einem der vorhergehenden Ansprüche, **dadurch gekennzeichnet, dass** ein entgegengesetzt gewölbter oder entgegengesetzt umgebogener Abschnitt (10, 12) relativ zu der Außenseite des Leitelements (11) verstellbar ist, insbesondere flexibel ist, um seine räumliche Lage bezüglich der Außenseite (111) des Leitelements (11) einstellen zu können.

5. Vorrichtung nach einem der vorhergehenden Ansprüche, **dadurch gekennzeichnet, dass** ein weiteres Dämpfungselement durch ein separates Element (22a, 22b) gebildet ist, das lediglich an einen Abschnitt des Leitelements (11) oder eines sich hieran in der Ausbreitungsrichtung der zweiten Oberflächenwelle (OW2) an das Leitelement (11) anschließenden Abschnitts (10, 12) des Wellenleiters angeformt oder befestigt ist.

6. Vorrichtung nach Anspruch 5, **dadurch gekennzeichnet, dass** das separate Element eine Vergussmasse (22a, 22b) umfasst.

7. Vorrichtung nach Anspruch 6, **dadurch gekennzeichnet, dass** der Empfänger (S/E2, S/E 1) zumindest teilweise in der Vergussmasse (22b, 22a) aufgenommen ist.

8. Vorrichtung nach Anspruch 6 oder 7, **dadurch gekennzeichnet, dass** sich die Vergussmasse (22a, 22b) zwischen zwei sich gegenüberliegenden Bereichen an dem gewölbten oder umgebogenen Abschnitt (10, 12) befindet.

9. Vorrichtung nach Anspruch 8, **dadurch gekennzeichnet, dass** die Vergussmasse (22a, 22b) die zwei sich gegenüberliegenden Bereiche miteinander verbindet.

10. Vorrichtung nach einem der vorhergehenden Ansprüche, **dadurch gekennzeichnet, dass** der Wellenleiter Teil eines Rohres oder offenen Gerinnes der Vorrichtung (V) ist, in dessen Innenraum (I) sich das Medium (F) befindet, oder dass der Wellenleiter Teil eines Sensorelements der Vorrichtung (V) ist, das zur Bestimmung der physikalischen, chemischen und/oder biologischen Eigenschaften eines Mediums (F) in einen mit dem Medium (F) gefüllten Innenraum (I) einzutauchen ist.

11. Vorrichtung nach einem der vorhergehenden Ansprüche, **dadurch gekennzeichnet, dass** ein Wölbungsradius R der Innenseite (110) des Leitelements (11) in Abhängigkeit von einer Frequenz f in MHz der wenigstens einen anzuregenden ersten Oberflächenwelle (OW1) eingestellt ist, und zwar gemäß der Formel

$$R \geq \frac{30mm*MHz}{f} .$$

12. Vorrichtung nach einem der vorhergehenden Ansprüche, **dadurch gekennzeichnet, dass** der Wellenleiter einen Halteabschnitt (13) aufweist,

- der als Handhabe für einen Nutzer dient und/oder
- der als Befestigungselement für eine Sensorintegration dient und/oder
- an dem ein Dämpfungselement (22b) und/oder ein Sender und/oder Empfänger (S/E1) angeordnet ist.

13. Vorrichtung nach einem der vorhergehenden Ansprüche, **dadurch gekennzeichnet, dass** der Wellenleiter mindestens zwei Sender-Empfänger-Paare (S/E1, S/E2) aufweist.

14. Vorrichtung nach einem der vorhergehenden Ansprüche, **dadurch gekennzeichnet, dass** ein Sender und ein Empfänger durch eine Sender-Empfänger-Einheit (S/E1, S/E2), die wahlweise als Sender oder als Empfänger betreibbar ist, bereitgestellt sind.

15. Vorrichtung nach einem der vorhergehenden Ansprüche, **dadurch gekennzeichnet, dass** der Sender und/oder der Empfänger durch einen Transducer gebildet sind, insbesondere einem Interdigitaltransducer oder einem Wedge-Transducer.

**Claims**

1. An apparatus for determining physical, chemical and/or biological properties of a medium, comprising

   - an acoustic waveguide, which has a conduction element (11) with an inner side (110) that faces the medium (F) and an outer side (111) that lies opposite this inner side (110),
   - at least one transmitter (S/E1, S/E2), by means of which at least one first surface wave (OW1) is excitable at the conduction element (11), said at least one first surface wave propagating along the conduction element (11) and, moreover, at least partly coupling into the medium (F) as an acoustic wave (VW), wherein the waveguide is embodied and configured such that the acoustic wave (VW) at least partly couples into the conduction element (11) again as a second surface wave (OW2),
   - at least one receiver (S/E2, S/E1), by means of which both first and second surface waves (OW1, OW2) are receivable, and
   - one electronic evaluation device (AS) that is coupled at least to the receiver (S/E2, S/E1), by means of which evaluation device physical, chemical and/or biological properties of the medium (F) are determinable on the basis of received first and second surface waves (OW1, OW2),
   wherein

- the inner side (110) facing the medium (F) is curved in concave fashion and the outer side (111) is curved in convex fashion and the waveguide with the conduction element (11) curved in that way is configured such that a second surface wave (OW2) coupling-in at the concave inner side (110) propagates along a propagation direction to the receiver (S/E2, S/E1), and

- provision is made of at least one damping element (10, 12, 22a, 22b) that lies downstream of the receiver (S/E1, S/E2) in the propagation direction of the second surface wave (OW2), said damping element prevents surface waves propagating counter to the propagation direction of the at least one second surface wave (OW2) from reaching the receiver (S/E1, S/E2),

> **characterized in that**
> the conduction element (11) is adjoined by a portion of the waveguide as a damping element (10, 12), which is curved and/or bent counter to the conduction element (11).

2. The apparatus as claimed in claim 1, **characterized in that** a bending radius r of the portion serving as a damping element (10, 12) is less than a radius of curvature R of the conduction element (11).

3. The apparatus as claimed in claim 2, **characterized in that** R/r ≥ 1.5, in particular R/r ≥ 3.5, applies to the ratio between radius of curvature R and bending radius r.

4. The apparatus as claimed in any one of the preceding claims, **characterized in that** an oppositely curved or oppositely bent portion (10, 12) is adjustable, in particular flexible, relative to the outer side of the conduction element (11) in order to be able to set the spatial position relative to the outer side (111) of the conduction element (11).

5. The apparatus as claimed in any one of the preceding claims, **characterized in that** a further damping element is formed by a separate element (22a, 22b), which is formed or fastened only to a portion of the conduction element (11) or to a portion (10, 12) of the waveguide adjoining the conduction element (11) in the propagation direction of the second surface wave (OW2).

6. The apparatus as claimed in claim 5, **characterized in that** the separate element comprises a potting compound (22a, 22b).

7. The apparatus as claimed in claim 6, **characterized in that** the receiver (S/E2, S/E1) is at least partly held in a potting compound (22b, 22a).

8. The apparatus as claimed in claim 6 or 7, **characterized in that** the potting compound (22a, 22b) is situated between two opposite regions on the curved or bent portion (10, 12).

9. The apparatus as claimed in claim 8, **characterized in that** the potting compound (22a, 22b) connects the two opposite regions to one another.

10. The apparatus as claimed in any one of the preceding claims, **characterized in that** the waveguide is part of a pipe or open channel of the apparatus (V), in the interior (I) of which the medium (F) is situated, or **in that** the waveguide is part of a sensor element of the apparatus (V) that should be immersed into an interior (I) filled with a medium (F) for the purposes of determining the physical, chemical and/or biological properties of the medium (F).

11. The apparatus as claimed in any one of the preceding claims, **characterized in that** a radius of curvature R of the inner side (110) of the conduction element (11) is set depending on a frequency f in MHz of the at least one first surface wave (OW1) to be excited, to be precise according to the formula

$$R \geq \frac{30mm*MHz}{f}.$$

12. The apparatus as claimed in any one of the preceding claims, **characterized in that** the waveguide has a holding portion (13),

> - which serves as a handle for a user and/or
> - which serves as a fastening element for a sensor integration and/or
> - at which the damping element (22b) and/or a transmitter and/or receiver (S/E1) is arranged.

13. The apparatus as claimed in any one of the preceding claims, **characterized in that** the waveguide has at least two transmitter-receiver pairs (S/E1, S/E2).

14. The apparatus as claimed in any one of the preceding claims, **characterized in that** a transmitter and a receiver are provided by a transmitter-receiver unit (S/E1, S/E2), which is selectively operable as a transmitter or as a receiver.

15. The apparatus as claimed in any one of the preceding claims, **characterized in that** the transmitter and/or the receiver are formed by a transducer, in particular an interdigital transducer or a wedge transducer.

**Revendications**

1. Dispositif de détermination de caractéristiques physiques, chimiques et/ou biologiques d'un milieu, avec

   - un guide d'ondes acoustiques, qui présente un élément conducteur (11) avec un côté intérieur (110) tourné vers le milieu (F) et un côté extérieur (111) faisant face audit côté intérieur (110),
   - au moins un émetteur (S/E1, S/E2), au moyen duquel au moins une première onde de surface (OW1) peut être excitée sur l'élément conducteur (11), laquelle se propage sur l'élément conducteur (11) et est injectée de plus au moins en partie en tant qu'onde acoustique (VW) dans le milieu (F), dans lequel le guide d'ondes est réalisé et est configuré pour que l'onde acoustique (VW) soit injectée à nouveau en tant que deuxième onde de surface (OW2) au moins proportionnellement sur l'élément conducteur (11),
   - au moins un récepteur (S/E2, S/E1), au moyen duquel à la fois des premières et des deuxièmes ondes de surface (OW1, OW2) peuvent être reçues, et
   - un dispositif d'évaluation (AS) électronique couplé au moins au récepteur (S/E2, S/E1), au moyen duquel des propriétés physiques, chimiques et/ou biologiques du milieu (F) peuvent être déterminées sur la base de premières et deuxièmes ondes de surface (OW1, OW2) reçues,
   dans lequel
   - le côté intérieur (110) tourné vers le milieu (F) est bombé de manière concave et le côté extérieur (111) est bombé de manière convexe et le guide d'ondes est mis au point avec l'élément conducteur (11) bombé de telle manière qu'une deuxième onde de surface (OW2) injectée sur le côté intérieur (110) concave se propage le long d'une direction de propagation par rapport au récepteur (S/E2, S/E1), et
   - au moins un élément d'amortissement (10, 12, 22a, 22b) se situant dans la direction de propagation de la deuxième onde de surface (OW2) derrière le récepteur (S/E1, S/E2) est prévu, lequel évite que des ondes de surface qui se propagent à l'opposé par rapport à la direction de propagation de l'au moins une deuxième onde de surface (OW2) n'atteignent le récepteur (S/E1 S/E2),

   **caractérisé en ce que**
   une section du guide d'ondes en tant qu'élément d'amortissement (10, 12) se raccorde à l'élément conducteur (11), laquelle est bombée et/ou repliée à l'opposé par rapport à l'élément conducteur (11).

2. Dispositif selon la revendication 1, **caractérisé en ce qu'**un rayon de cintrage r de la section faisant office d'élément d'amortissement (10, 12) est inférieur à un rayon de bombement R de l'élément conducteur (11).

3. Dispositif selon la revendication 2, **caractérisé en ce que** s'applique R/r ≥ 1,5, en particulier R/r ≥ 3,5 pour le rapport entre le rayon de bombement R et le rayon de cintrage r.

4. Dispositif selon l'une quelconque des revendications précédentes, **caractérisé en ce qu'**une section (10, 12) bombée à l'opposé ou repliée à l'opposé peut être ajustée par rapport au côté extérieur de l'élément conducteur (11), en particulier laquelle est flexible pour pouvoir régler sa position spatiale par rapport au côté extérieur (111) de l'élément conducteur (11).

5. Dispositif selon l'une quelconque des revendications précédentes, **caractérisé en ce qu'**un autre élément d'amortissement est formé par un élément séparé (22a, 22b), qui est formé ou fixé seulement sur une section de l'élément conducteur (11) ou sur une section (10, 12), se raccordant à l'élément conducteur (11) dans la direction de propagation de la deuxième onde de surface (OW2), du guide d'ondes.

6. Dispositif selon la revendication 5, **caractérisé en ce que** l'élément séparé comprend une masse de scellement (22a, 22b).

7. Dispositif selon la revendication 6, **caractérisé en ce que** le récepteur (S/E2, S/E1) est logé au moins en partie dans la masse de scellement (22b, 22a).

8. Dispositif selon la revendication 6 ou 7, **caractérisé en ce que** la masse de scellement (22a, 22b) se trouve entre deux zones se faisant face sur la section (10, 12) bombée ou repliée.

9. Dispositif selon la revendication 8, **caractérisé en ce que** la masse de scellement (22a, 22b) relie entre elles les deux zones se faisant face.

10. Dispositif selon l'une quelconque des revendications précédentes, **caractérisé en ce que** le guide d'ondes fait partie d'un tuyau ou d'un canal ouvert du dispositif (V), dans l'espace intérieur duquel (I) se trouve le milieu (F), ou que le guide d'ondes fait partie d'un élément de capteur du dispositif (V), qui doit être plongé dans un espace intérieur (I) rempli du milieu (F) pour déterminer les propriétés physiques, chimiques et/ou biologiques d'un milieu (F).

11. Dispositif selon l'une quelconque des revendications précédentes, **caractérisé en ce qu'**un rayon de bombement R du côté intérieur (110) de l'élément conducteur (11) est réglé en fonction d'une fréquence f en MHz de l'au moins une première onde de surface (OW1) à exciter, à savoir selon la formule

$$R \geq \frac{30mm*MHz}{f} \ .$$

12. Dispositif selon l'une quelconque des revendications précédentes, **caractérisé en ce que** le guide d'ondes présente une section de maintien (13)

   - qui fait office de manette pour un utilisateur, et/ou
   - qui fait office d'élément de fixation pour une intégration de capteur et/ou
   - sur laquelle un élément d'amortissement (22b) et/ou un émetteur et/ou un récepteur (S/E1) sont disposés.

13. Dispositif selon l'une quelconque des revendications précédentes, **caractérisé en ce que** le guide d'ondes présente au moins deux paires d'émetteur-récepteur (S/E1, S/E2).

14. Dispositif selon l'une quelconque des revendications précédentes, **caractérisé en ce qu'**un émetteur et un récepteur sont fournis par une unité émetteur-récepteur (S/E1, S/E2), lesquels peuvent fonctionner au choix en tant qu'émetteur ou en tant que récepteur.

15. Dispositif selon l'une quelconque des revendications précédentes, **caractérisé en ce que** l'émetteur et/ou le récepteur sont formés par un transducteur, en particulier un transducteur internumérique ou un transducteur d'angle.

# FIG 1

## FIG 2A

## FIG 2B

FIG 2C

FIG 2D

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008034878 A2
- DE 102014106706 A1
- DE 102011119673 A1
- EP 2343548 A2
- US 4735097 A